# EUROPEAN PATENT SPECIFICATION

(11) **EP 3 096 924 B1**
(45) Date of publication and mention of the grant of the patent: **26.12.2018**
(21) Application number: 14841416.2
(22) Date of filing: 31.12.2014
(51) Int. Cl.: B25J 9/16, B25J 11/00, B25J 13/08, B24B 37/005, B24B 41/00, B24B 41/06, B24B 49/16

(54) **THE METHOD OF PROCESSING MULTIDIMENSIONAL OBJECTS AND LARGE AND CURVED SURFACES USING CHEMICAL AND MECHANICAL NANO STRUCTURING METHOD AND CONFIGURATION OF ROBOTIC ARM EMPLOYED IN REALIZING THIS METHOD**
VERARBEITUNGSVERFAHREN FÜR MEHRDIMENSIONALE OBJEKTE SOWIE GROSSE UND GEKRÜMMTE OBERFLÄCHEN MIT CHEMISCHEM UND MECHANISCHEM NANOSTRUKTURIERUNGSVERFAHREN UND KONFIGURATION EINES ROBOTERARMS ZUR DURCHFÜHRUNG DES VERFAHRENS
PROCÉDÉ DE TRAITEMENT D'OBJETS MULTIDIMENSIONNELS, GRANDES SURFACES CINTRÉES AU MOYEN D'UN PROCÉDÉ DE NANOSTRUCTURATION CHIMIO-MÉCANIQUE ET CONFIGURATION DE BRAS ROBOTIQUE UTILISÉ POUR METTRE EN OEUVRE LE PROCÉDÉ

(30) Priority: 31.12.2013 TR 201315577; 25.03.2014 TR 201403476; 03.04.2014 TR 201403879
(43) Date of publication of application: 30.11.2016
(73) Proprietor: Ozyegin Universitesi, Istanbul (TR)
(72) Inventor: BASIM, Gul Bahar, Istanbul (TR); BEBEK, Ozkan, Istanbul (TR); ORHAN, Sabri Orcun, Istanbul (TR); OZDEMIR, Zeynep, Istanbul (TR)
(74) Representative: Coral, Nükhet Serra Yardimci
(86) International application number: PCT/TR2014/000530
(87) International publication number: WO 2015/102552

(56) References cited:
- EP-A1- 1 764 192
- US-A1- 2004 102 135
- US-A1- 2012 220 194

## Description

### Technical Field

The invention is about the adaptation of two-dimensional CMP/Chemical Mechanical Polishing process and processing tool to a 3-D configuration with the integration of a robotic arm with a force/torque sensor sample holder to enable nano-structuring of multidimensional objects such as biomedical implants (dental implants) heating elements (resistors), as well as wide and irregular surfaces of vehicle/aircraft panels.

CMP is a process that is used to planarize the wafer surfaces in microelectronics manufacturing to enable multi-layer metallization. CMP process employs slurries that involve an aggressive chemistry to alter the properties of the film to be polished and this film is removed by the mechanical actions of the particulates in the suspension. In an optimal CMP slurry design for metal layers, the formation of the metal oxide film should be self-limiting and once formed, it must protect the underlying metal from the further attack of the slurry chemicals. This is necessary to polish the higher level metal while protecting the lower levels, in other words, to achieve topographic selectivity and hence provide planarization.

It is possible to induce roughness on the surfaces of the metallic materials at variable root mean square (RMS) values by changing the polishing pads as well as slurry formulations (both chemicals and the sizes and solids loading of the slurry nano-particles) used during the CMP process, which affect the surface roughness both chemically and mechanically. Through utilization of the CMP process in a controlled manner, it is plausible to induce nano-scale smoothness as well as nano-scale roughness. This process, which is the subject of the proposed invention, offers alternatives in medical and materials science and engineering fields where processes are frequently required to improve the surfaces of the materials. Through the new proposed methodologies, it will be possible to apply the CMP based nano-structuring on three dimensional objects in a number of sectors where surface structure (roughness or smoothness) is critical in the functionality of the materials such as automotive and aviation industries as well as on biomaterials, surfaces of the heating elements and reactive surfaces etc.

US Application No. 13/294,684 (US Publication No. US 2012/0220194) generally discloses a method and an apparatus for smart automation of robotic surface finishing of a three-dimensional surface of a work piece using a polishing tool and slurry. However, this reference does not disclose processing of a work piece to provide both CMP and a nano-scale oxide layer on a surface of the work piece, nor does the reference disclose processing of a work piece to provide both CMP-based nano-structuring and a nano-scale oxide layer on the surface of the work piece.

### Current Status of the Technique

While there are conventional techniques available for the application of the nano-structuring on the materials surfaces such as; sandblasting, nano-litography, anodic oxidization, ion implantation etc., most of these techniques have some disadvantages such as; (i) the tendency of particles used in sandblasting of sticking on the metal surfaces creating points of anodization, (ii) lithography techniques being very expensive and furthermore the fact that neither of these techniques can help prevent corrosion. Yet, the proposed nano-structuring that will be induced through the CMP process will simultaneously create a protective metal oxide layer which will help protect the metal surface from corrosion as well as unwanted surface contamination Particularly, for the medical applications the absence of a protective layer on the metal surface increases the risk of the contamination and threatens the healing of the tussue. Furthermore, the currently available surface nano-structuring methods cannot carry out the surface structuring in a controlled manner, whereas the CMP technique can generate atomically smooth surfaces as well as required level of nano-structuring can be induced as the specific application may demand.

As another example, surface roughness on the current resistors have an uncontrolled and irregular structure (locally very rough or smooth/containing various degrees of roughness-smoothness at micro/nano scale). Such phenomenon causes uncontrolled scale formation on heating element surface and may lead to uncontrolled growth of the produced lime layer. Therefore, surface of heating element is preferred to be smooth. However, since it is not possible to produce smooth heating element surfaces at nano scale, coating the heater surfaces with various substances is a generally preferred procedure to minimize lime adhesion resulting in formation of an additional interface inducing interfacial stresses.

CMP as in its current conventional usage is a 2-Dimensional process. On the other hand, the heating elements used in the washing machines, dishwashers, kettles, water heaters etc' are multidimensional as well as the dental implants or the panels used for the car/plane manufacturing. In summary, although CMP technique is a novel approach for the nano-structuring of the objects that can be used in many industrial applications, the process needs to be adjusted for the 3-Dimensional objects.

### Purpose of the Invention

The proposed invention is designed by accounting for the current 2-Dimensional processing conditions and transposing it to a 3-Dimensional application to address the inadequacies specified above.

Main purposes of the invention are listed as follows:
(i) Processing surfaces of aluminum, titanium, steel, copper, metallic alloys or similar metallic surfaces using CMP to providing surface modification while simultaneously generating a protection against corrosion structure.
(ii) Evaluation of the corrosion resistances of the processed material and optimization of the induced nano structures to improve corrosion resistance, paint adhesion and surface quality.
(iii) Application of the CMP process to wide and irregular surfaces for the repair of the small areas where local deteriorations such as paint deformations, corrosions etc. on the metal plates and panels.
(iv) Development of novel robotic systems to adopt the 2-D CMP application to a 3-D large and non-planar metal surfaces (such as aircrafts, car panels etc').

One of the newly developed methods which is the subject of the current invention ensures smoothing or roughening of the materials surface both mechanically and chemically (by employing oxidizing and abrasive agents), to provide nano-structuring. In the method which is the subject of the invention, the nano-scale material removal on the object simultaneously ensures that the surface, is also cleared from the contamination created in the production process or other processes the object has gone through.

In the method which is the subject of the invention, with the oxidizing chemicals that are fed through the CMP slurry, a non-porous and continuous protective oxide film layer with a thickness of 6-8 nm is formed. This protective nano-scale oxide film ensures protection of the surface against corrosion and further contamination.

Another and the most important feature of the developed method is the possibility of application on any 3-Dimensional surfaces based on the integration of the robotic arm and a force-torque sensor mechanism integrated to the manufacturing process. While surface modification at nano-scale was possible on a flat sample in the conventional method, the method presented in this invention will make it possible to perform the required surface processing of the 3-D objects at any point of the work piece through adjustable sample holder and modified polishing pad formulations.

As an exemplary application, the basic goals of the technology that developed under the nano-structuring of the large and curvy surfaces are (i) to minimize deterioration of the surface due to environmental factors and to improve paint adhesion capacity by forming self-protective nano films and nano structuring on the metal (aluminum) surface, simultaneously prior to painting or paint renewal, (ii) to extend the paint lifespan of the metal by using a similar approach during repair of the surfaces, (iii) to develop robotic systems for ensuring fast and effective application of the suggested process, in order to improve corrosion and deformation resistance of aluminum outer surfaces of bodies of the vehicles such as airplanes, cars.

Another target of the alternative configuration of the invention is to offer a process, which can perform nano-structuring on multidimensional and irregular 3-D objects such as resistors and alternative heating elements by employing CMP technique. The application of CMP on heating elements is to minimize the lime adhesion by providing controlled smoothness/roughness directly at either micro or nano scale on the base material that is used for the heating element manufacturing.

As a third alternative the proposed 3-D CMP based nano-structuring can be adopted for medical fields where metals and their alloys are frequently used as bio-implants. Furthermore, the proposed invention will be easily adoptable to the other fields of materials processing with the proposed adjustments and process configurations. Hence, it will be possible to apply the innovation on three dimensional materials in a number of sectors where surface structure (roughness or smoothness) is important such as automotive industry, biomaterials, aircrafts etc'.

The following explanations on the figures related to the invention will detail the structural and characteristic features and all advantages of the invention more clearly.

### Figures Which Contribute to the Comprehension of the Invention

### Implementation of the 3-D CMP method on dental implants:

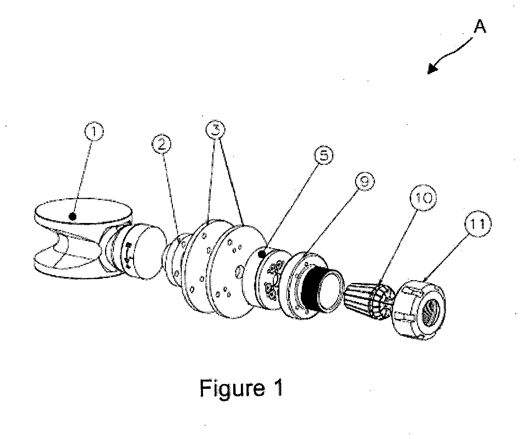

Figure 1 illustrates the magnified view of the robotic arm configuration employed in the method used for the 3-D CMP configuration on dental implants, which is the first part of the subject of the invention.

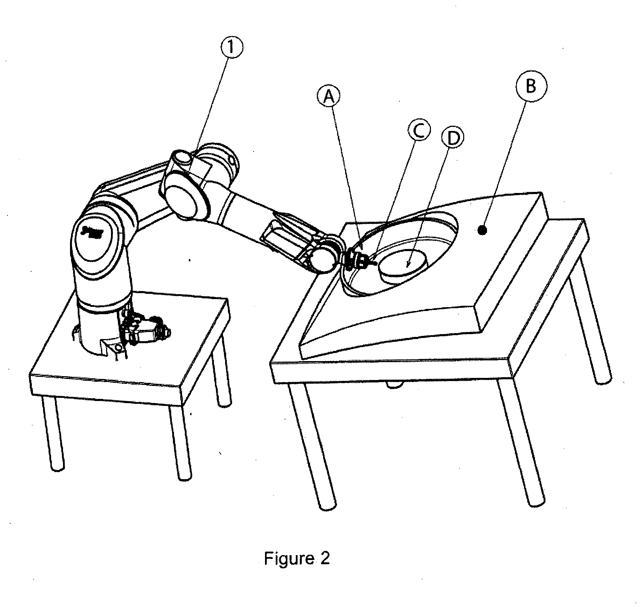

Figure 2 shows configuration of the CMP device and the robotic arm, that is used to hold the work piece against the CMP device employed in the first part of the invention.

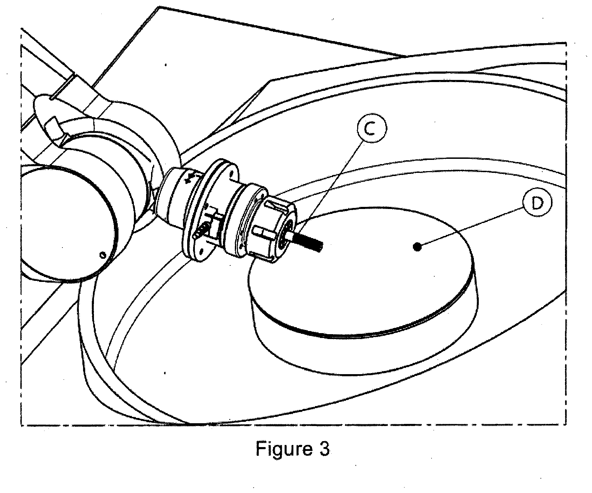

Figure 3 is the detailed illustration of Figure 2.

### Implementation of the 3-D CMP method on large and curvy surfaces:

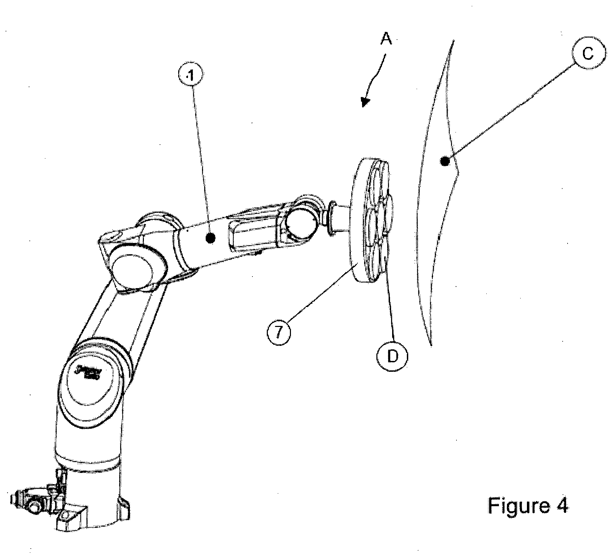

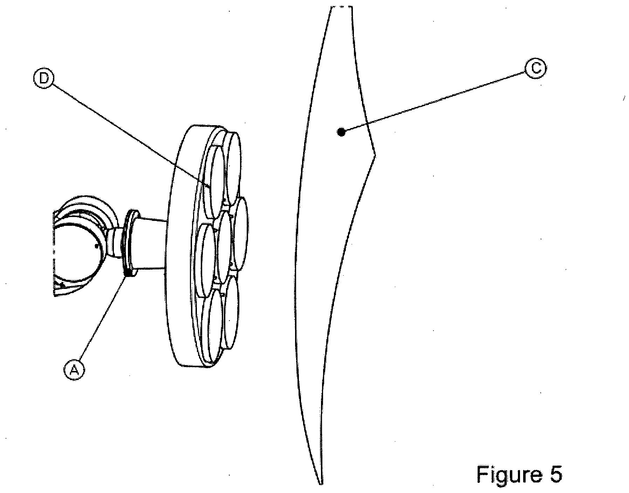

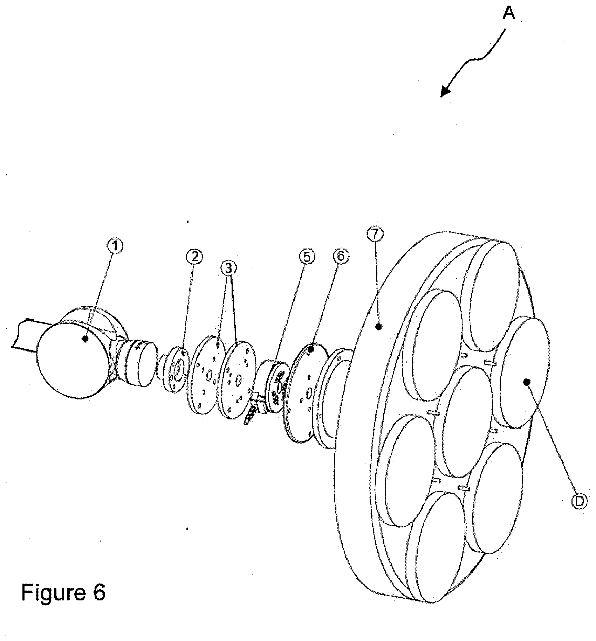

Figure 4 and Figure 5 show the robotic arm configuration which is used in the second alternative configuration of the invention that is the implementation of the 3-D CMP method on large and curvy surfaces. In this form the robotic arm is configured to push the pads to the surface to be processed with CMP. Figure 6 is the magnified perspective view of the robotic arm configuration employed in this alternative configuration.

### Implementation of the 3-D CMP method on objects with irregular geometry:

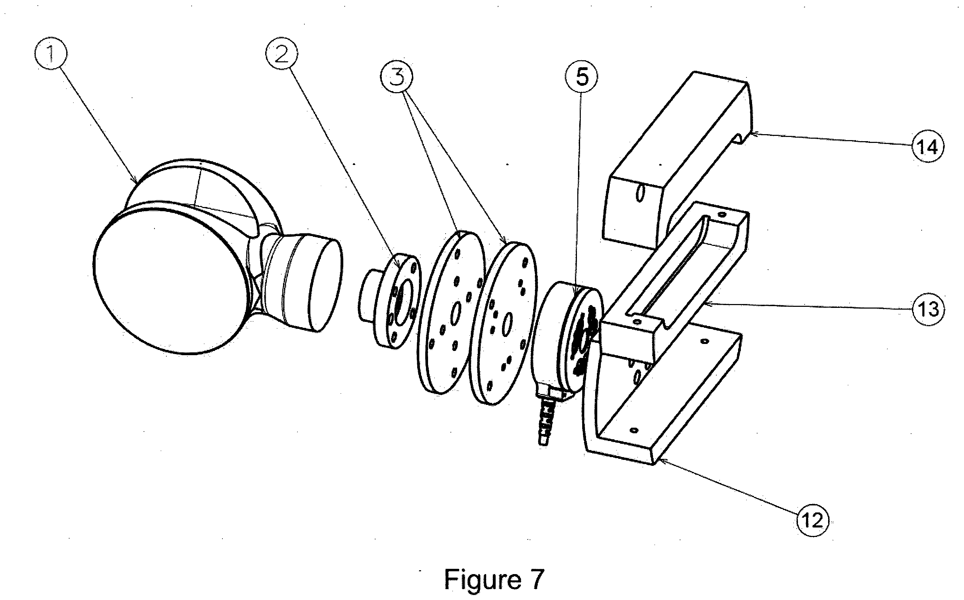

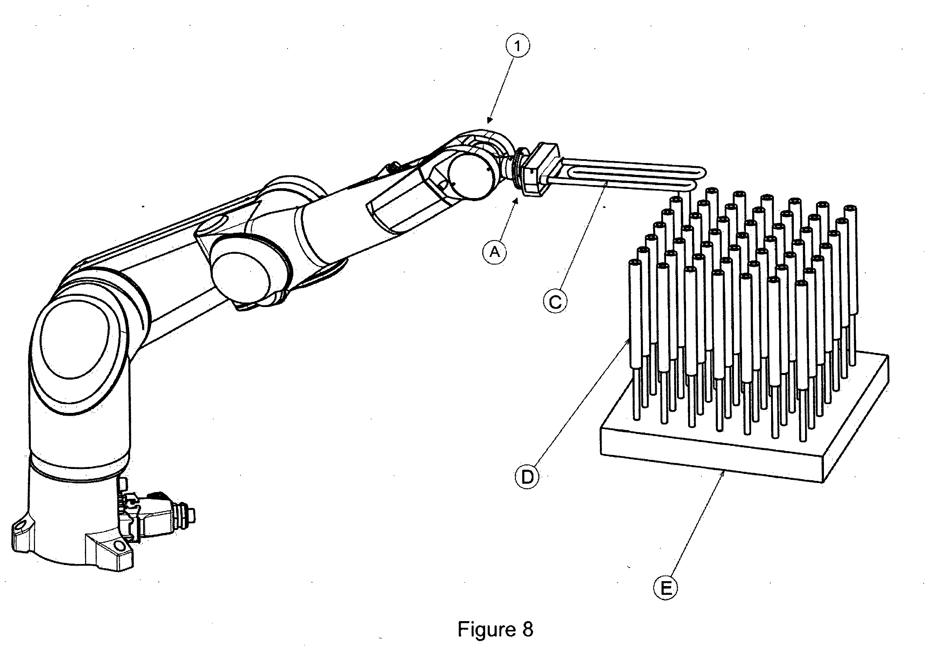

Figure 7 is the perspective drawing of the implementation of the 3-D CMP on objects with irregular geometry for the third approach of the proposed invention Figure 8 shows the pad device and the robotic arm configurations holding the work piece towards the pad that is used in the third alternative that is mentioned.

### Description of Part References

A. Robotic arm configuration
   **1.** Industrial robotic arm
   **2.** Flange
   **3.** Connection plate
   **5.** Force-torque sensor
   **6.** Pad retainer fastener
   7. Pad retainer
   9. Retainer base
   10. Retainer head
   11. Fastener
   12. Fastener base
   13. Fastener carrier
   14. Fastener head
**B.** CMP device
**C.** Work piece
**D.** Pad
**E.** Pad holder

The figures are not drawn to scale and the details which are not necessary to explain the proposed invention are neglected. Also, items which are largely identical or which have largely identical functions are indicated with the same number.

### Detailed Explanation of the Invention

In this part of detailed explanation, the three methods which are the subjects of the inventions and the related robotic arm configurations used in the relevant configurations are explained to better describe the inventions.

### First Alternative Configuration

Robotic arm configuration (A) in the method, which is the subject of the invention is comprised of industrial robot arm (1), flange (2), connection plates (3), force-torque sensor (5), retainer base (9), retainer head (10) and fastener (11).

In the robotic arm configuration (A), which is the subject of the invention, industrial robot arm (1) has industrial serial kinematics configuration with 6 degrees of freedom. The aforementioned industrial robot arm (1) ensures access to any point from any angle in 3 dimensional space, based on these features. Flange (2) connects the connection plates (3) and industrial robotic arm (1) together. Robotic arm configuration (A) contains two connection plates (3). The function of connection plates (3) is to connect force-torque sensor (5) to the flange (2). Function of force-torque sensor (5) is to measure the force between the surface of the work piece (C) and the pad (D). Retainer base (9) is the part where retainer head (10) is placed inside. Retainer head (10) is the component, which retains the work piece (C). Fastener (11) is preferably a nut and used as an apparatus for tightening the retainer head (10) to the retainer base (9). Retainer is composed of retainer base (9), retainer head (10) and fastener (11). A configuration, which is similar to claw, can be used as retainer instead of these components.

Installation of the robotic arm configuration, which is the subject of the invention is realized as follows: Firstly, the work piece (C) which is preferably a dental implant is placed inside the retainer head (10). Then, by tightening the fastener (11) work piece (C) as an example an implant, is tightened inside the retainer head (10). In a configuration where a claw is used as retainer, this installation steps can be omitted and the work-piece can be retained by the help of a claw. Force-torque sensor (5) is located between retainer and industrial robotic arm (1). Two connection plates (3) are used to fix the force-torque sensor (5) to the industrial robotic arm (1). One of the connection plates (3) is screwed to connect force-torque sensor (5) and the second one to the flange (2). Two connection plates (3) are screwed together to fix force-torque sensor (5) to the industrial robot arm (1). Pad (D) is contacted to the surface of the work piece (C) to ensure structuring or smoothing the aforementioned surface. Different types of pads (D) can be used in the robotic arm configuration (A), which is the subject of the invention.

Method which is the subject of the invention functions as follows: First of all, the work piece (C) which is preferably a dental implant is held by the retainer and the pad (D) which will be used in the process is positioned inside the CMP device (B) according to the shape of the surface and location of the dental implant by the help of the industrial robotic arm (1). The work piece (C) is pressed against the pad (D) by the help of the industrial robotic arm (1) and a contact surface is established between the pad (D) and the work piece (C). The force created on the aforementioned contact surface is measured by a force-torque sensor (5), retainer is positioned again to the force values determined beforehand and it is ensured that the dental implant is kept still by the industrial robotic arm (1). With the pad (D) installed, the pad table of the CMP device (B) originates rotation at a predefined speed to ensure mechanical abrasion on the contact surface. Meanwhile, chemical is fed to the work piece (C) at the required quantity by the slurry pump system of the CMP device (B) throughout the predefined process and mechanical removal is performed on the surface of the dental implant as a result of the friction occurring on the contact surface between the pad (D) and dental implant. Also, by the help of the slurry chemicals, a non-porous and protective oxide layer is formed on the surface of the dental implant and the hence the processed surface is protected. The retainer is positioned at different positions by the industrial robotic arm (1) to ensure that the overall surface of the work piece (C) is exposed during polishing uniformly.. Upon performing positioning, aforementioned processes, which are listed below, are performed in a cycle until the entire surface of the work piece (C) is treated;
- measurement of the force created on the contact surface by force-torque sensor (5);
- repositioning of the retainer to the predefined force values;
- rotation of the pad table of CMP device (B) which is installed with the pad (D) at a defined speed;
- slurry flow on the work piece (C);
- positioning of the retainer at different positions during polishing process by the industrial robotic arm (1).

Chemical agent administered by the pump system of the CMP device (B) varies dependent to the work piece (C) and may contain nano-particles of varying structures, water-based chemicals, surfactants etc.

Robotic arm configuration (A), which is the subject of the invention is used for processing dental implants by employing chemical and mechanical nano-structuring method.

### Second Alternative Configuration:

- Robotic arm configuration (A) which is used in the method realized by the configuration of alternative one of the invention (first alternative configuration) is comprised of industrial robot arm (1), flange (2), connection plates (3), force-torque sensor (5), pad retainer fastener (6), pad retainer (7) and pads (D).
- In the robotic arm configuration (A), which is the subject of the invention, industrial robot arm (1) has industrial serial kinematics configuration with 6 degrees of freedom. The aforementioned industrial robot arm (1) ensures access to any point from any angle in 3 dimensional space, thanks to these features. Flange (2) connects the connection plates (3) and industrial robotic arm (1) together. Robotic arm configuration (A) contains two connection plates (3). The function of connection plates (3) is to connect force-torque sensor (5) to the flange (2). Function of force-torque sensor (5) is to measure the force between the surface to be processed of the work piece (C) and the pad (D). Pad retainer (7) is the section where the pads (D) to be used for processing the surface are held by the industrial robot arm (1). Pad retainer (7) allows rotation of the pads (D) at the required speed with the motor it contains. Also, with the channels on the pad retainer (7), required amount of chemical flow is ensured on the surface to be processed. Pads (D) located on the pad retainer (7) perform the mechanical abrasion by being pressed on the surface of the work piece (C) by the help of the industrial robot arm (1).
- Installation of the robotic arm configuration, which is the subject of the invention is realized as follows: Surface of the work piece (C) and pads (D) selected according to the required structuring features are placed on the pad retainer (7). Force-torque sensor (5) is located between pad retainer (7) and industrial robotic arm (1). Two connection plates (3) are used to fix the force-torque sensor (5) to the industrial robotic arm (1). One of the connection plates (3) is screwed to connect force-torque sensor (5) and the other connection plate (3) is screwed to the flange (2). Two connection plates (3) are screwed together to fix force-torque sensor (5) to the industrial robot arm (1). Pad retainer (7) is connected to the industrial robot arm (1) through pad retainer fastener. Pad retainer fastener (6) is primarily screwed to force-torque sensor (5). Then, pad retainer (7) is screwed to pad retainer fastener (6) to complete assembly of robot arm configuration (A) through pad retainer fastener.
- Method which is the subject of the invention is realized as follows: Firstly, pads (D) retained by pad retainer (7) are positioned according to the shape and location of the surface of the work piece (C) by the help of the industrial robot arm (1). Pads (D) are pressed against the surface to be processed for the work piece (C) by the help of industrial robotic arm (1) and it is ensured that a contact surface is established between the pad (D) and the surface to be processed. Force created at the mentioned contact area is measured by force-torque sensor (5), pad retainer (7) is relocated at the force values determined beforehand. To ensure mechanical abrasion on the contact area, pads (D) are rotated at a preset constant speed with the motor located inside the pad retainer (7). Mechanical machining process is performed on the surface to be processed due to the friction created at the contact area between the pad (D) and the surface to be processed. At the same time, sufficient quantity of chemical is fed on the surface to be processed through the channels on the pad retainer (7) throughout the specified process. In the end of this process, a protective oxide layer without porosity is formed on the surface to be processed and processed surface of the work piece (C) is protected. The retainer is positioned at different positions by the industrial robotic arm (1) to ensure that all areas of the surface to be processed (C) are polished uniformly during polishing process. Upon performing positioning, aforementioned processes which are listed below are continued in a cycle until all areas on the surface of to be processed of the work piece (C) is treated;
   - measurement of the force created on the contact area by force-torque sensor (5);
   - repositioning of the pad retainer (7) to the predefined force values;
   - ensuring mechanical abrasion by rotating the pads (D) located on the pad retainer (7) at the defined speed;
   - slurry flow on the surface to be processed of the work piece (C);
   - positioning of the pad retainer (7) at different positions during polishing process by the industrial robotic arm (1).

   Chemical agents administered by the channel system on the pad retainer (7) varies depending on the surface to be processed and may contain nano-particles of varying structures, water-based chemicals, surfactants etc.
   Robotic arm configuration (A), which is the subject of the invention is used for processing surfaces, which are large and curved by employing chemical and mechanical nano-structuring method.

### Third Alternative Configuration

- Robotic arm configuration (A), which is used in the method realized by the configuration of the other alternative of the invention (third alternative configuration) is comprised of industrial robotic arm (1), flange (2), connection plates (3), force-torque sensor (5), fastener base (12), fastener carrier (13) and fastener head (14).
- In the robotic arm configuration (A), which is the subject of the invention, industrial robot arm (1) has industrial serial kinematics configuration with 6 degrees of freedom. The aforementioned industrial robot arm (1) ensures access to any point from any angle in 3 dimensional space. Flange (2) connects the plates (3) and industrial robotic arm (1) together. Robotic arm configuration (A) contains two connection plates (3). The function of connection plates (3) is to connect force-torque sensor (5) to the flange (2). Function of force-torque sensor (5) is to measure the force between the surface to be processed to the work piece (C) and the pad (D). Retainer to be connected to the Force-Torque sensor (5) consists of 3 parts as fastener base (12), fastener carrier (13) and fastener head (14). Fastener base (12) ensures fastening of the holder to the force-torque sensor (5). Fastener carrier (13) is the apparatus where work piece (C) is placed in the retainer and used to retain the piece appropriately. Fastener head (14) is the part, which ensures fastening of the work piece (C) in the retainer.
- Installation of the robotic arm configuration (A), which is the subject of the invention is realized as follows: Firstly, force-torque sensor (5) is fastened to the industrial robot arm (1). Two connection plates (3) are used for this purpose. The first one of the connection plates (3) is screwed to connect force-torque sensor (5) and the other connection plate (3) is screwed to the flange (2). Then, these two connection plates (3) are screwed together to fix force-torque sensor (5) to the industrial robot arm (1). As the following step, for the procedure of fixing the retainer to the force-torque sensor (5), firstly, fastener base (12) is screwed to connect force-torque sensor (5), fastener carrier (13) which is installed with the work piece (C) that is preferably a resistor is screwed to the fastener base (12). Finally, fastener head (14) is screwed to fastener carrier (13) and it is ensured that the work piece, (C) is kept still by the industrial robot arm (1).
- Method which is the subject of the invention is realized as follows: First of all, the work piece (C) which is preferably a resistor is held by the retainer and the pad device (B) which is installed with the pads (D) which are predetermined for the process are positioned according to the shape of the surface and location of the resistor by the help of the industrial robotic arm (1). The work piece (C) is pressed against the pad (D) by the help of the industrial robotic arm (1) and a contact surface is established between the pad (D) and the work piece (C). The force created on the aforementioned contact surface is measured by force-torque sensor (5), retainer is positioned again to the force values determined beforehand and it is ensured that work piece (C) is kept still by the industrial robotic arm (1). To ensure mechanical abrasion on the contact surface, pads (D) on the pad device (E) are rotated at a preset constant speed with the motors located inside the pad device (E). At the same time, sufficient quantity of chemical is fed on the work piece (C) through the channel system in the pad mechanism on the pad device (E) throughout the specified process. Mechanical machining process is performed on the area to be processed due to the friction created at the contact area between the pad (D) and the surface of the work piece (C). Also, by the help of the added chemicals, a non-porous protective oxide layer is created on the surface of the work piece (C) and the treated surface is protected. The retainer is positioned at different positions by the industrial robotic arm (1) to ensure that all surfaces of the work piece (C) are polished uniformly during polishing process. Upon performing positioning, aforementioned processes which are listed below are continued in a cycle until the entire surface of the work piece (C) is treated;
   - measurement of the force created on the contact surface by force-torque sensor (5);
   - repositioning of the retainer to the predefined force values;
   - rotating the pads (D) on the pad device (E) with the motors located inside the pad device (E) at a preset constant speed;
   - feeding chemicals on the work piece (C) through the channel system in the pad mechanism;
   - positioning of the retainer at different positions during polishing process by the industrial robotic arm (1).

   Slurry administered by the channel system on the pad device (B) varies dependent to the work piece (C) and may contain nano-particles of varying structures, water-based chemicals, surfactants etc.
   Robotic arm configuration (A), which is the subject of the invention is used for processing resistors by employing chemical and mechanical nano-structuring method.

## Claims

1. A robotic arm configuration for chemical mechanical polishing (CMP) of a work piece, the robotic arm configuration comprising:
a robotic arm (1) having serial kinematics configuration with 6 degrees of freedom;
a force-torque sensor (5) operably coupled to a distal end of the robotic arm (1);
a slurry of an oxidizing agent and an abrasive agent;
a pad retainer (7) operably coupled to a distal end of the force-torque sensor (5), the pad retainer (7) including a slurry channel for providing the slurry of an oxidizing agent and an abrasive agent; and
a rotatable pad (D) for CMP operably coupled to the pad retainer (7),
wherein the force-torque sensor (5) is configured to measure force between the work piece (C) and the pad (D), and further wherein the robotic arm (1), the pad (D), and the slurry are configured to provide both CMP and a nano-scale oxide layer on a surface of the work piece (C).

2. The robotic arm configuration for CMP according to Claim 1, wherein the slurry includes components selected from the group consisting of nano-particles, water-based chemicals, and surfactants.

3. The robotic arm configuration for CMP according to Claim 1, wherein the nano-scale oxide layer has a thickness between about 6 nm and about 8 nm.

4. The robotic arm configuration for CMP according to Claim 1, wherein the robotic arm, the pad, and the slurry are configured to simultaneously provide both CMP-based nano-structuring and a nano-scale oxide layer on the surface of the work piece (C).

5. A system for chemical mechanical polishing (CMP) of a work piece, the system comprising:
a CMP device (B) including:
a rotatable pad (D) for CMP,
a slurry of an oxidizing agent and an abrasive agent, and
a slurry pump system for providing the slurry of an oxidizing agent and an abrasive agent to the pad (D); and a robotic arm configuration (A) including:
a robotic arm (1) having serial kinematics configuration with 6 degrees of freedom,
a force-torque sensor (5) operably coupled to a distal end of the robotic arm (1), and
a work piece retainer operably coupled to a distal end of the force-torque sensor (5), the work piece retainer for holding the work piece (C),
wherein the force-torque sensor (5) is configured to measure force between the work piece (C) and the pad (D), and further wherein the CMP device (B) and the robotic arm configuration (A) are configured to provide both CMP and a nano-scale oxide layer on a surface of the work piece (C).

6. The system for CMP according to Claim 5, wherein the slurry includes components selected from the group consisting of nano-particles, water-based chemicals, and surfactants.

7. The system for CMP according to Claim 5, wherein the work piece (C) is a dental implant or a heating element.

8. The system for CMP according to Claim 5, wherein the nano-scale oxide layer has a thickness between about 6 nm and about 8 nm.

9. The system for CMP according to Claim 5, wherein the CMP device (B) and the robotic arm configuration (A) are configured to simultaneously provide both CMP-based nano-structuring and a nano-scale oxide layer on the surface of the work piece (C).

10. A method of chemical mechanical polishing (CMP), comprising:
providing a robotic arm configuration (A), including:
a robotic arm (1) having serial kinematics configuration with 6 degrees of freedom,
a force-torque sensor (5) operably coupled to a distal end of the robotic arm (1),
a pad retainer (7) operably coupled to a distal end of the force-torque sensor (5), the pad retainer (7) including a slurry channel, and
a rotatable pad (D) for CMP, the rotatable pad (D) operably coupled to the pad retainer (7);
providing a slurry of an oxidizing agent and an abrasive agent to the pad (D) through the slurry channel;
rotating the pad (D);
providing a work piece (C) apart from the robotic arm configuration (A);
moving the robotic arm configuration (A) to contact the pad (D) to the work piece (C) with a portion of the slurry therebetween;
measuring force between the pad (D) and the work piece (C); and
providing both CMP and a nano-scale oxide layer on a surface of the work piece (C) contacted by the pad (D) and the slurry.

11. A method of chemical mechanical polishing (CMP), comprising:
providing a system for CMP, comprising:
a CMP device (B) including:
a rotatable pad (D) for CMP, and
a slurry pump system; and
a robotic arm configuration (A) including:
a robotic arm (1) having serial kinematics configuration with 6 degrees of freedom,
a force-torque sensor (5) operably coupled to a distal end of the robotic arm (1), and
a work piece retainer operably coupled to a distal end of the force-torque sensor (5);
providing a slurry of an oxidizing agent and an abrasive agent to the pad (D) through the slurry pump system;
rotating the pad (D);
providing a work piece (C) in the work piece retainer;
moving the robotic arm configuration to contact the work piece (C) to the pad (D) with a portion of the slurry therebetween;
measuring force between the work piece (C) and the pad (D); and
providing both CMP and a nano-scale oxide layer on a surface of the work piece (C) contacted by the pad (D) and the slurry.

12. The method of CMP according to any one of Claims 10 and 11, further comprising providing both CMP-based nano-structuring and a nano-scale oxide layer on the surface of the work piece (C).

13. The method of CMP according to any one of Claims 10 and 11, wherein the providing of a slurry includes providing a slurry having components selected from the group consisting of nano-particles, water-based chemicals, and surfactants.

14. The method of CMP according to any one of Claims 10 and 11, wherein the providing of a work piece (C) includes providing of a dental implant or a heating element.

15. The method of CMP according to any one of Claims 10 and 11, wherein the nano-scale oxide layer is provided to have a thickness between about 6 nm and about 8 nm.

## Patentansprüche

1. Roboterarmanordnung zum chemisch-mechanischen Polieren (CMP) eines Werkstücks, die Roboterarmanordnung aufweisend:
einen Roboterarm (1) aufweisend eine serielle Kinematikanordnung mit 6 Freiheitsgraden;
einen Kraft-Drehmomentfühler (5) funktionsfähig verbunden mit einem distalen Ende des Roboterarms (1);
eine Aufschlämmung eines Oxidationsmittels und eines Schleifmittels;
einen Plattenhalter (7), der funktionsfähig mit einem distalen Ende des Kraft-Drehmomentfühlers (5) verbunden ist, der Plattenhalter (7) aufweisend einen Aufschlämmungskanal zum Bereitstellen der Aufschlämmung eines Oxidationsmittels und eines Schleifmittels; und
eine drehbare Platte (D) zum CMP, funktionsfähig verbunden mit dem Plattenhalter (7),
wobei der Kraft-Drehmomentfühler (5) derart gestaltet ist, dass er eine Kraft zwischen dem Werkstück (C) und der Platte (D) misst, und wobei ferner der Roboterarm (1), die Platte (D) und die Aufschlämmung derart gestaltet sind, dass sie an der Oberfläche des Werkstücks (C) sowohl CMP als auch eine nanoskalige Oxidschicht schaffen.

2. Roboterarmanordnung zum CMP nach Anspruch 1, wobei die Aufschlämmung Komponenten ausgewählt aus der Gruppe bestehend aus Nanopartikeln, Chemikalien auf Wasserbasis und oberflächenaktiven Mitteln aufweist.

3. Roboterarmanordnung zum CMP nach Anspruch 1, wobei die nanoskalige Oxidschicht eine Dicke zwischen ungefähr 6 nm und ungefähr 8 nm aufweist.

4. Roboterarmanordnung zum CMP nach Anspruch 1, wobei der Roboterarm, die Platte und die Aufschlämmung derart gestaltet sind, dass sie an der Oberfläche des Werkstücks (C) gleichzeitig sowohl eine CMP-basierte Nanostrukturierung als auch eine nanoskalige Oxidschicht schaffen.

5. System zum chemisch-mechanischen Polieren (CMP) eines Werkstücks, das System aufweisend:
eine CMP-Vorrichtung (B) aufweisend:
eine drehbare Platte (D) zum CMP,
eine Aufschlämmung eines Oxidationsmittels und eines Schleifmittels, und
ein Aufschlämmungspumpensystem zum Bereitstellen der Aufschlämmung eines Oxidationsmittels und eines Schleifmittels zur Platte (D); und
eine Roboterarmanordnung (A) aufweisend:
einen Roboterarm (1) aufweisend eine serielle Kinematikanordnung mit 6 Freiheitsgraden,
einen Kraft-Drehmomentfühler (5) funktionsfähig verbunden mit einem distalen Ende des Roboterarms (1), und
einen Werkstückhalter funktionsfähig verbunden mit einem distalen Ende des Kraft-Drehmomentfühlers (5), der Werkstückhalter dienend zum Halten des Werkstücks (C),
wobei der Kraft-Drehmomentfühler (5) derart gestaltet ist, dass er eine Kraft zwischen dem Werkstück (C) und der Platte (D) misst, und wobei ferner die CMP-Vorrichtung (B) und die Roboterarmanordnung (A) derart gestaltet sind, dass sie an der Oberfläche des Werkstücks (C) sowohl CMP als auch eine nanoskalige Oxidschicht schaffen.

6. System zum CMP nach Anspruch 5, wobei die Aufschlämmung Komponenten ausgewählt aus der Gruppe bestehend aus Nanopartikeln, Chemikalien auf Wasserbasis und oberflächenaktiven Mitteln aufweist.

7. System zum CMP nach Anspruch 5, wobei das Werkstück (C) ein Dentalimplantat oder ein Heizelement ist.

8. System zum CMP nach Anspruch 5, wobei die nanoskalige Oxidschicht eine Dicke zwischen ungefähr 6 nm und ungefähr 8 nm aufweist.

9. System zum CMP nach Anspruch 5, wobei die CMP-Vorrichtung (B) und die Roboterarmanordnung (A) derart gestaltet sind, dass sie an der Oberfläche des Werkstücks (C) gleichzeitig sowohl eine CMP-basierte Nanostrukturierung als auch eine nanoskalige Oxidschicht schaffen.

10. Verfahren zum chemisch-mechanischen Polieren (CMP), aufweisend:
Bereitstellen einer Roboterarmanordnung (A) aufweisend:
einen Roboterarm (1) aufweisend eine serielle Kinematikanordnung mit 6 Freiheitsgraden,
einen Kraft-Drehmomentfühler (5) funktionsfähig verbunden mit einem distalen Ende des Roboterarms (1),
einen Plattenhalter (7), der funktionsfähig mit einem distalen Ende des Kraft-Drehmomentfühlers (5) verbunden ist, der Plattenhalter (7) aufweisend einen Aufschlämmungskanal, und
eine drehbare Platte (D) zum CMP, die drehbare Platte (D) funktionsfähig verbunden mit dem Plattenhalter (7);
Bereitstellen einer Aufschlämmung eines Oxidationsmittels und eines Schleifmittels durch den Aufschlämmungskanal zur Platte (D);
Drehen der Platte (D);
Bereitstellen eines Werkstücks (C) neben der Roboterarmanordnung (A);
Bewegen der Roboterarmanordnung (A), um die Platte (D) mit einer Teilmenge der Aufschlämmung dazwischen mit dem Werkstück (C) in Berührung zu bringen;
Messen einer Kraft zwischen der Platte (D) und dem Werkstück (C); und
Schaffen sowohl von CMP als auch einer nanoskaligen Oxidschicht an einer Oberfläche des Werkstücks (C), welche mit der Platte (D) und der Aufschlämmung in Berührung steht.

11. Verfahren zum chemisch-mechanischen Polieren (CMP), aufweisend:
Bereitstellen eines Systems zum CMP, aufweisend:
eine CMP-Vorrichtung (B) aufweisend:
eine drehbare Platte (D) zum CMP, und
ein Aufschlämmungspumpensystem; und
eine Roboterarmanordnung (A) aufweisend:
einen Roboterarm (1) aufweisend eine serielle Kinematikanordnung mit 6 Freiheitsgraden,
einen Kraft-Drehmomentfühler (5) funktionsfähig verbunden mit einem distalen Ende des Roboterarms (1), und
einen Werkstückhalter funktionsfähig verbunden mit einem distalen Ende des Kraft-Drehmomentfühlers (5);
Bereitstellen einer Aufschlämmung eines Oxidationsmittels und eines Schleifmittels durch das Aufschlämmungskanalpumpensystem zur Platte (D);
Drehen der Platte (D);
Bereitstellen eines Werkstücks (C) im Werkstückhalter;
Bewegen der Roboterarmanordnung, um das Werkstück (C) mit einer Teilmenge der Aufschlämmung dazwischen mit der Platte (D) in Berührung zu bringen;
Messen einer Kraft zwischen dem Werkstück (C) und der Platte (D); und
Schaffen sowohl von CMP als auch einer nanoskaligen Oxidschicht an einer Oberfläche des Werkstücks (C), welche mit der Platte (D) und der Aufschlämmung in Kontakt steht.

12. Verfahren zum CMP nach einem der Ansprüche 10 und 11, ferner aufweisend das Bereitstellen sowohl einer CMP-basierten Nanostrukturierung als auch einer nanoskaligen Oxidschicht an der Oberfläche des Werkstücks (C).

13. Verfahren zum CMP nach einem der Ansprüche 10 und 11, wobei das Bereitstellen einer Aufschlämmung das Bereitstellen einer Aufschlämmung aufweist, welche Komponenten ausgewählt aus der Gruppe bestehend aus Nanopartikeln, Chemikalien auf Wasserbasis und oberflächenaktiven Mitteln aufweist.

14. Verfahren zum CMP nach einem der Ansprüche 10 und 11, wobei das Bereitstellen eines Werkstücks (C) das Bereitstellen eines Dentalimplantats oder eines Heizelements aufweist.

15. Verfahren zum CMP nach einem der Ansprüche 10 und 11, wobei die nanoskalige Oxidschicht derart geschaffen wird, dass sie eine Dicke zwischen ungefähr 6 nm und ungefähr 8 nm aufweist.

## Revendications

1. Une configuration à bras robotisé pour le polissage mécano-chimique (CMP) d'une pièce à travailler, la configuration à bras robotisé comprenant :
un bras robotisé (1) ayant une configuration cinématique en série à 6 degrés de liberté ;
un capteur de force-couple (5) accouplé fonctionnellement à une extrémité distale du bras robotisé (1) ;
une suspension d'un agent oxydant et d'un agent abrasif ;
un dispositif de retenue de tampon (7) accouplé fonctionnelement à une extrémité distale du capteur de force-couple (5), le dispositif de retenue de tampon (7) comprenant un canal à suspension pour la fourniture de la suspension d'un agent oxydant et d'un agent abrasif ; et
un tampon rotatif (D) pour le CMP accouplé fonctionnellement au dispositif de retenue de tampon (7),
dans laquelle le capteur de force-couple (5) est configuré pour mesurer la force entre la pièce à travailler (C) et le tampon (D) et en outre dans laquelle le bras robotisé (1), le tampon (D) et la suspension sont configurés à la fois pour fournir un CMP et une couche d'oxyde à l'échelle nanométrique sur une surface de la pièce à travailler (C).

2. Configuration à bras robotisé pour le CMP selon la revendication 1, dans laquelle la suspension comprend des composants choisis dans le groupe constitué par des nanoparticules, des produits chimiques à base d'eau et des tensioactifs.

3. Configuration à bras robotisé pour le CMP selon la revendication 1, dans laquelle la couche d'oxyde à l'échelle nanométrique a une épaisseur comprise entre environ 6 nm et environ 8 nm.

4. Configuration à bras robotisé pour le CMP selon la revendication 1, dans laquelle le bras robotisé, le tampon et la suspension sont configures pour simultanément à la fois fournir en oeuvre une nano-structuration basée sur un CMP et une couche d'oxyde à l'échelle nanométrique sur la surface de la pièce à travailler (C).

5. Un système pour le polissage mécano-chimique (CMP) d'une pièce à travailler, le système comprenant :
un dispositif de CMP (B) comprenant :
un tampon rotatif (D) pour le CMP,
une suspension d'un agent oxydant et d'un agent abrasif, et
un système de pompage de suspension pour fournir la suspension d'un agent oxydant et d'un agent abrasif au tampon (D) ; et
une configuration à bras robotisé (A) comprenant :
un bras robotisé (1) ayant une configuration cinématique en série à 6 degrés de liberté,
un capteur de force-couple (5) accouplé fonctionnellement à une extrémité distale du bras robotisé (1), et
un dispositif de retenue de pièce à travailler accouplé fonctionnellement à une extrémité distale du capteur de force-couple (5), le dispositif de retenue de pièce à travailler tenant la pièce à travailler (C),
dans laquel le capteur de force-couple (5) est configuré pour mesurer la force entre la pièce à travailler (C) et le tampon (D) et en outre dans lequel le dispositif de CMP (B) et la configuration à bras robotisé (A) sont configurés à la fois pour fournir un CMP et une couche d'oxyde à l'échelle nanométrique sur une surface de la pièce à travailler (C).

6. Système pour le CMP selon la revendication 5, dans lequel la suspension comprend des composants choisis dans le groupe constitué par des nanoparticules, des produits chimiques à base d'eau et des tensioactifs.

7. Système pour le CMP selon la revendication 5, dans lequel la pièce à travailler (C) est un implant dentaire ou un élément chauffant.

8. Système pour le CMP selon la revendication 5, dans lequel la couche d'oxyde à l'échelle nanométrique a une épaisseur comprise entre environ 6 nm et environ 8 nm.

9. Système pour le CMP selon la revendication 5, dans lequel le dispositif de CMP (B) et la configuration à bras robotisé (A) sont configurés pour simultanément à la fois fournir une nano-structuration basée sur un CMP et former une couche d'oxyde à l'échelle nanométrique sur la surface de la pièce à travailler (C).

10. Un procédé de polissage mécano-chimique (CMP), comprenant :
la fourniture d'une configuration à bras robotisé (A), comprenant :
un bras robotisé (1) ayant une configuration cinématique en série à 6 degrés de liberté,
un capteur de force-couple (5) accouplé fonctionnellement à une extrémité distale du bras robotisé (1),
un dispositif de retenue de tampon (7) accouplé fonctionnellement à une extrémité distale du capteur de force-couple (5), le dispositif de retenue de tampon (7) comprenant un canal à suspension, et
un tampon rotatif (D) pour le CMP, le tampon rotatif (D) étant accouplé fonctionnellement au dispositif de retenue de tampon (7);
la fourniture d'une suspension d'un agent oxydant et d'un agent abrasif au tampon (D) par le canal à suspension ;
la rotation du tampon (D) ;
la fourniture d'une pièce à travailler (C) à l'écart de la configuration à bras robotisé (A) ;
le déplacement de la configuration à bras robotisé (A) pour mettre en contact le tampon (D) avec la pièce à travailler (C) avec une partie de la suspension entre eux ;
la mesure de la force entre le tampon (D) et la pièce à travailler (C) ; et
à la fois la fourniture d'un CMP et d'une couche d'oxyde à l'échelle nanométrique sur une surface de la pièce à travailler (C) en contact avec le tampon (D) et la suspension.

11. Un procédé de polissage mécano-chimique (CMP), comprenant :
la fourniture d'un système pour le CMP, comprenant :
un dispositif de CMP (B) comprenant :
un tampon rotatif (D) pour le CMP et
un système de pompage de suspension ; et
une configuration à bras robotisé (A) comprenant :
un bras robotisé (1) ayant une configuration cinématique en série à 6 degrés de liberté,
un capteur de force-couple (5) accouplé fonctionnellement à une extrémité distale du bras robotisé (1), et
un dispositif de retenue de pièce à travailler accouplé fonctionnellement à une extrémité distale du capteur de force-couple (5) ;
la fourniture d'une suspension d'un agent oxydant et d'un agent abrasif au tampon (D) par le système de pompage de suspension ;
la rotation du tampon (D) ;
la fourniture d'une pièce à travailler (C) dans le dispositif de retenue de pièce à travailler ;
le déplacement de la configuration à bras robotisé pour mettre en contact la pièce à travailler (C) avec le tampon (D) avec une partie de la suspension entre eux ;
la mesure de la force entre la pièce à travailler (C) et le tampon (D) ; et
à la fois la fourniture d'un CMP et la d'une couche d'oxyde à l'échelle nanométrique sur une surface de la pièce à travailler (C) en contact avec le tampon (D) et la suspension.

12. Procédé de CMP selon l'une quelconque des revendications 10 et 11, comprenant en outre à la fois la fourniture d'une nano-structuration basée sur un CMP et d'une couche d'oxyde à l'échelle nanométrique sur la surface de la pièce à travailler (C).

13. Procédé de CMP selon l'une quelconque des revendications 10 et 11, dans lequel la fourniture d'une suspension comprend la fourniture d'une suspension ayant des composants choisis dans le groupe constitué par des nanoparticules, des produits chimiques à base d'eau et des tensioactifs.

14. Procédé de CMP selon l'une quelconque des revendications 10 et 11, dans lequel la fourniture d'une pièce à travailler (C) comprend la fourniture d'un implant dentaire ou d'un élément chauffant.

15. Procédé de CMP selon l'une quelconque des revendications 10 et 11, dans lequel la couche d'oxyde à l'échelle nanométrique est fournie pour avoir une épaisseur comprise entre environ 6 nm et environ 8 nm.
